# EUROPÄISCHE PATENTANMELDUNG

(11) **EP 0 789 001 A2**
(43) Veröffentlichungstag der Anmeldung: **13.08.1997**
(21) Anmeldenummer: 96114112.4
(22) Anmeldetag: 04.09.1996
(51) Int. Cl.: C02F 3/12

(54) **Vorrichtung zum biologischen Reinigen von Wasser**

(30) Priorität: 12.09.1995 DE 19533631
(71) Anmelder: Hans Brochier GmbH & Co, D-90482 Nürnberg (DE)
(72) Erfinder: Zhang, Jiansan, Dr.-Ing., 63471 Aschaffenburg (DE); Lammich, Peter, Dipl.-Ing., 63776 Mömbris (DE); Weidlich, Michael, 63853 Mömlingen (DE)
(74) Vertreter: Sparing - Röhl - Henseler Patentanwälte

(57) **Zusammenfassung**

Die Erfindung betrifft eine Vorrichtung zum biologischen Reinigen von Wasser mit einem Behandlungsgefäß (1), in dem ein Schwimmkornfilterbett (3) unter einem Siebboden (2) zum Begrenzen des Schwimmkornbereichs gegenüber darüber befindlichem Reinwasser angeordnet ist, wobei eine Zuleitung für zu reinigendes Rohwasser unterhalb des Schwimmkornfilterbetts (3) mündet und eine das Schwimmkorn abführende und spülende Wasserstrahlpumpe (6, 7) in der Zuleitung vorgesehen ist. Hierbei weist die Zuleitung ein unter dem Siebboden (2) befindliches, mittig und vertikal angeordnetes Zuleitungsrohr (5) auf, das unterhalb des Schwimmkornfilterbetts (3) endet und benachbart zum Siebboden (2) eine Verengung besitzt, die mit einem vor der Verengung (6) mündenden Injektor (7) die Wasserstrahlpumpe (6, 7) bildet.

## Beschreibung

Die Erfindung betrifft eine Vorrichtung zum biologischen Reinigen von Wasser nach dem Oberbegriff des Anspruchs 1.

Aus der DE-C 43 41 805 ist es bekannt, in einer Vorrichtung zum biologischen Reinigen von Wasser einen konischen Siebboden mit der Spitze nach oben einzusetzen, der darüber befindliches Reinwasser vom Schwimmkorn eines Schwimmkornfilters trennt. Zur kontinuierlichen Biofiltrierung wird hierbei Schwimmkorn an der Spitze des Siebbodens abgesaugt, einer mit Rohwasser betriebenen Wasserstrahlpumpe außerhalb des Behandlungsgefäßes zugeführt, in dieser gespült und mit dem Rohwasser und den Verunreinigungen dem Behandlungsgefäß unterhalb des Schwimmkornfilters wieder zugeführt. Der Unterteil des Behandlungsgefäßes dient hierbei als Schlammeindicker. Das Schwimmkorn wird hierbei in einem Spülkreislauf geführt, der aus dem Behandlungsgefäß herausgeführt ist und dementsprechende Leitungen außerhalb des Behandlungsgefäßes umfaßt.

Aufgabe der Erfindung ist es, eine Vorrichtung nach dem Oberbegriff des Anspruchs 1 zu schaffen, die es ermöglicht, bei kontinuierlicher Biofiltration einen Spülkreislauf für das Schwimmkorn innerhalb des Behandlungsgefäßes auszubilden.

Diese Aufgabe wird entsprechend dem kennzeichnenden Teil des Anspruchs 1 gelöst.

Hierbei wird eine Wasserstrahlpumpe im Bereich unterhalb des Siebbodens innerhalb des Schwimmkornfilters ausgebildet, die zumindest im wesentlichen mit zu reinigendem Rohwasser als Treibstrahlwasser betrieben wird, um Schwimmkorn von der Unterseite des Siebbodens abzusaugen, in der Wasserstrahlpumpe zu spülen und unter das Schwimmkornfilter zu befördern, von wo es wieder aufsteigt, so daß sich ein kontinuierlich betriebener Spülkreislauf für das Schwimmkorn innerhalb des Behandlungsgefäßes ausbildet. Außerdem läßt sich durch die Bewegung des Schwimmkorns entlang des Siebbodens dieser freihalten.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt eine Ausführungsform einer Vorrichtung zum biologischen Reinigen von Wasser ausschnittweise und schematisch im Schnitt.

Fig. 2 zeigt einen Siebboden der Vorrichtung von Fig. 1 in Draufsicht.

Fig. 3 zeigt eine weitere Ausführungsform einer Vorrichtung zum biologischen Reinigen von Wasser schematisch im Schnitt.

Fig. 4 zeigt einen Schnitt längs der Linie II-II von Fig. 3.

Fig. 5 zeigt ausschnittweise eine modifizierte Ausführungsform.

Fig. 6 zeigt schematisch und ausschnittweise eine dritte Ausführungsform einer Vorrichtung schematisch im Schnitt.

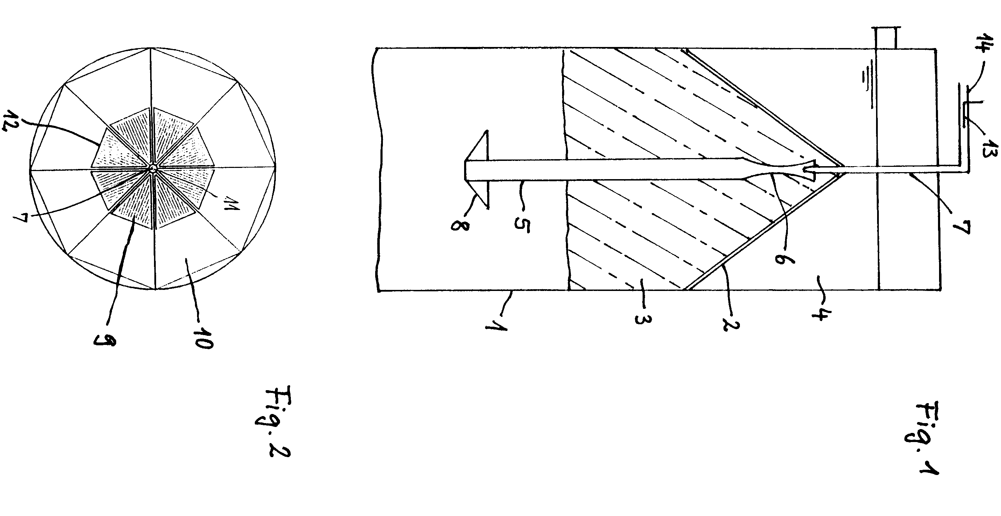

Die in Fig. 1 dargestellte Vorrichtung umfaßt ein Behandlungsgefäß 1, das bei diesem Ausführungsbeispiel oben offen und in dem ein konischer Siebboden 2 mit spitzem Konuswinkel angeordnet ist, der ein Schwimmkornfilterbett 3 unterhalb des Siebbodens 2 von einem Reinwasserbereich 4 oberhalb des Siebbodens 2 trennt.

Der Siebboden 2 kann als Filterdüsenboden oder als Schlitzdüsenboden ausgebildet sein. Das Schwimmkorn des Schwimmkornfilterbetts 3 (etwa Polystyrolkugeln) kann beispielsweise eine Korngröße von 1,5 bis 2 mm bei einer spezifischen Oberfläche von 1500 bis 1900 m²/m³ aufweisen, um eine möglichst große Fläche zum Tragen und Aufwachsen von Mikroorganismen zu bieten.

Im Zuleitungsrohr 5 ist im Bereich des Schwimmkornfilterbetts 3 benachbart zur Kegelspitze des Siebbodens 2 eine venturidüsenartige Verengung 6 angeordnet, die nach oben offen ist und vor der ein von oben durch den Siebboden 2 geführter Injektor 7 mündet, so daß eine Wasserstrahlpumpe gebildet wird. Über den Injektor 7 wird zu reinigendes Rohwasser, gegebenenfalls unter Zumischung von Reinwasser, als Treibstrahlwasser der Wasserstrahlpumpe zugeführt. Hierdurch wird auf die Umgebung der Eintrittsseite des Zuleitungsrohrs 5 eine entsprechende Saugkraft ausgeübt, so daß entsprechend Schwimmkorn aus dem Bereich der Kegelspitze des Siebbodens 2 angesaugt, in der Wasserstrahlpumpe verwirbelt und dadurch gespült, mit hoher Geschwindigkeit in die Tiefe des Behandlungsgefäßes befördert wird und anschließend zur Unterseite des Schwimmkornfilters 3 aufsteigt. Auf diese Weise wird das Schwimmkorn innerhalb des Behandlungsgefäßes 1, das in seinem unteren Bereich einen Schlammsammelraum bildet, in einem Spülkreislauf geführt.

Zur Verteilung des Schwimmkorns und zur Vermeidung von Kurzschlußströmungen kann das Zuleitungsrohr 5 austrittsseitig mit einer kegeligen Verteilerplatte 8 versehen sein.

Der Siebboden 2 ist insbesondere als Schlitzdüsenboden ausgebildet, wobei seine Schlitze 9 deutlich schmaler als der Korndurchmesser des Schwimmkorns sind, bei der oben angegebenen Korngröße beispielsweise 0,8 mm, und eine Länge von mindestens mehreren Korndurchmessern aufweisen. Die Schlitze 9 verlaufen hierbei zweckmäßigerweise im wesentlichen radial, so daß sie infolge der Bewegung des daran entlangstreichenden Schwimmkorns auf seinem Weg zur Wasserstrahlpumpe hin freigehalten werden.

Gemäß Fig. 2 ist zur Vereinfachung der Konstruktion ein nur im wesentlichen kegeliger Siebboden 2 vorgesehen, der als oktaedrische Pyramide aus entsprechenden, an ihren Kanten miteinander verschweißten Platten 10 verwirklicht ist, die an der Spitze mit einer achteckigen Platte 11 verschweißt sind und benachbart zur Pyramidenspitze Ausnehmungen aufweisen, die von mit den Schlitzen 9 versehenen Filtersegmenten 12 abgedeckt sind. Durch die Platte 11 ist der Injektor 7 geführt.

Ein Gasinjektor 13 zum Injizieren des für die biologische Reinigung benötigten Gases (für eine aerobe Biofiltration wird zweckmäßigerweise Luft oder reiner Sauerstoff verwendet) kann in einer Zuleitung 14 zum Injektor 7 vorgesehen sein und ermöglicht eine direkte Nachlösung von Gas an Ort und Stelle im Schwimmkornfilterbett 3 entsprechend dem Verbrauch des Gases bei der Biofiltration.

Stattdessen kann auch eine Innenbelüftung vorgesehen sein.

Da bei Behandlungsgefäßen 1 mit sehr großen Durchmessern ihre Höhe infolge des bei der in Fig. 1 dargestellten Ausführungsform zum Vermeiden von Totzonen benötigten, im wesentlichen die Höhe des spitzkegeligen Siebbodens 2 verhältnismäßig stark zunimmt, sind bei größeren Durchmessern und plane oder im wesentlichen flachkonische Siebböden zu wählen, wobei zusätzliche Maßnahmen zu treffen sind, um den Schwimmkornkreislauf ohne Totzonenausbildung aufrechtzuerhalten. Hierzu dienen die nachfolgend beschriebenen Ausführungsformen.

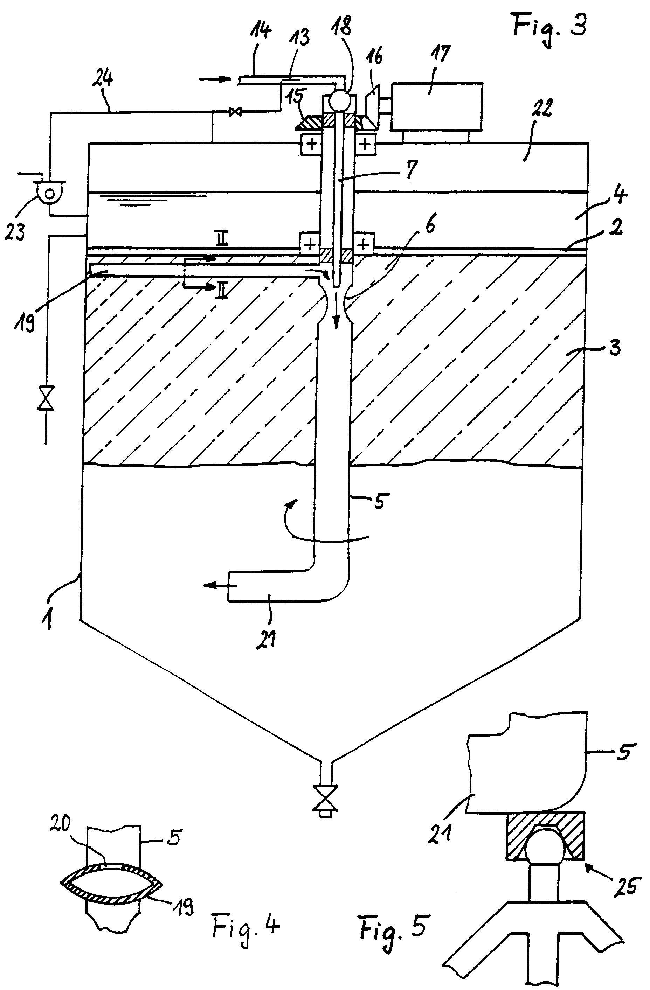

Bei der in Fig. 3 dargestellten Vorrichtung ist das Behandlungsgefäß als geschlossener Behälter ausgebildet. Hierbei ist das Zuleitungsrohr 5 in dem Behandlungsgefäß 1 drehbar gelagert angeordnet und an seinem aus dem Behandlungsgefäß herausragenden Ende mit einem Antrieb versehen, der im dargestellten Fall ein Kegelrad 15 umfaßt, das über ein Ritzel 16 durch einen Antriebsmotor 17 gedreht werden kann.

Im Zuleitungsrohr 5 ist im Bereich des Schwimmkornfilterbetts 3 die Verengung 6 angeordnet, vor der der Injektor 7 zur Bildung der Wasserstrahlpumpe mündet. Der Injektor 7 ist etwa über ein Kugelgelenk 18 am oberen Ende des Zuleitungsrohrs 5 mit der Zuleitung 14 für zu reinigendes Rohwasser (dem auch ein Teil des Reinwassers zugesetzt sein kann), mit dem die Wasserstrahlpumpe betrieben wird, verbunden.

Das Zuleitungsrohr 5 trägt mindestens einen sich horizontal im wesentlichen über den Radius des Siebbodens 2 erstreckenden Ansaugarm 19, der etwas unterhalb des Siebbodens 2 angeordnet und mit Eintrittsöffnungen 20 für Schwimmkorn versehen ist. Um die Lagerung des Zuleitungsrohrs 5 möglichst wenig zu beanspruchen, ist eine symmetrische Anordnung von wenigstens zwei Ansaugarmen 19 zweckmäßig. Der Ansaugarm 19 ist beispielsweise in einem Abstand von 10 bis 30 Korndurchmessern des Schwimmkorns vom Siebboden 2 beabstandet und mündet vor der Wasserstrahlpumpe in das Zuleitungsrohr 5.

Die Eintrittsöffnungen 20 haben einer Größe derart, daß mehrere Körner des Schwimmkorns gleichzeitig ohne Verstopfungserscheinungen hindurchpassen.

Der Ansaugarm 19 kann in Drehrichtung im Schnitt spitz zulaufend ausgebildet sein, um so einfach und ohne größeren Widerstand das Schwimmkorn zu durchpflügen. Die Eintrittsöffnungen 20 können an der oberen Seite angeordnet sein. Sie können sich aber auch seitlich oder an der Unterseite des Ansaugarms 19 befinden.

Die Abstände der Eintrittsöffnungen 20 im Ansaugarm 19 können von innen nach außen derart abnehmen, daß das Schwimmkorn hiervon im wesentlichen gleichmäßig pro Flächeneinheit des Siebbodens 2 aufgenommen wird. Dies kann aber auch über die Größe der Eintrittsöffnungen 20 stattdessen oder zusätzlich gesteuert werden.

Das vom Ansaugarm 19 durch die Wirkung der Wasserstrahlpumpe eingesaugte Schwimmkorn wird im Bereich der Wasserstrahlpumpe verwirbelt und gespült.

Das Zuleitungsrohr 5 reicht bis unter das Schwimmkornfilterbett 3, damit das hierdurch zugeführte, zu reinigende Rohwasser zusammen mit dem durch den Ansaugarm 19 von der Unterseite des Siebbodens 2 abgesaugten Schwimmkorn und den in der Wasserstrahlpumpe abgetrennten Verunreinigungen unterhalb des Schwimmkornfilterbetts 3 benachbart zu einem Schlammsammelbereich zugeführt wird. Die Verunreinigungen sedimentieren im Unterteil des Behandlungsgefäßes 1, der als Schlammeindicker dient, um von Zeit zu Zeit entfernt zu werden. Das Behandlungsgefäß 1 kann zu diesem Zweck einen zu einem Ablauf schräg verlaufenden Boden oder einen planen bzw. falchkegeligen Boden mit einem drehbaren Räumer aufweisen.

Um eine gute Verteilung des Schwimmkorns und des Rohwassers zu erreichen, kann das Zuleitungsrohr 5 an seinem unteren Ende ein etwa rechtwinklig abgewinkeltes Auslaßstück 21 aufweisen. Es kann aber auch mit einer konischen Verteilerplatte 8 wie bei der Ausführungsform von Fig. 1 versehen sein. Eine konische Verteilerplatte 8 kann aber auch fest im Behandlungsgefäß installiert sein und gegebenenfalls als Lagerung für das Zuleitungsrohr 5 dienen.

Wenn bei dieser Ausführungsform der Siebboden 2 als Schlitzdüsenboden ausgebildet ist, ist es zweckmäßig, die Schlitze 9 mit einer Länge von wenigstens einigen Schwimmkorndurchmessern im wesentlichen in Umfangsrichtung ausgerichtet anzuordnen, da sie dann durch entlangstreichendes Schwimmkorn, das durch das Drehen des Ansaugarms 19 bezüglich der Schlitze bewegt wird, zusätzlich freigehalten werden.

Der Ansaugarm 19 saugt zwangsläufig auch Reinwasser aus dem Reinwasserbereich 4 an, das die Filterdüsen oder Schlitze 9 des Siebbodens 2 in Richtung zum Schwimmkornfilterbett 3 durchströmt und somit zur Reinigung des Siebbodens 2 beiträgt.

Über dem Reinwasserbereich 4 kann ein Gaspolster 22 aus dem für die biologische Reinigung verwendeten Gas vorgesehen sein. Der Druck des Gaspolsters 22 wird dann über einen Niveauregler 23, der über den Wasserspiegel des Reinwassers gesteuert wird, und durch Kontrolle der Gaslöslichkeit konstant gehalten, indem verbrauchtes Gas von außen über eine Gasleitung 24 ersetzt wird. Im Überschuß mitgeführtes und ungelöst gebliebenes Gas wird im Gaspolster 22 gesammelt.

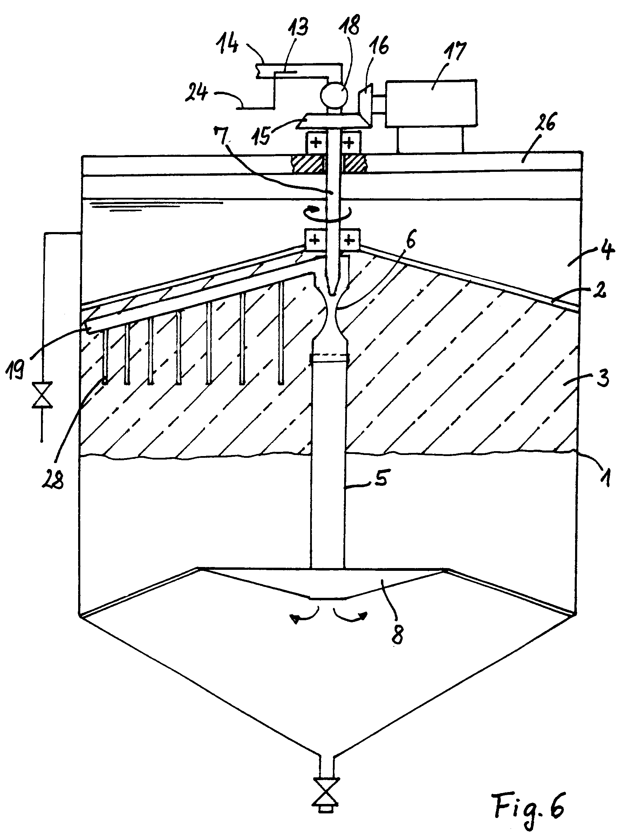

Während bei der Ausführungsform der Fig. 3 das Zuleitungsrohr 5 von Wälzkörperlagern gelagert wird, ist gemäß Fig. 5 vorgesehen, ein das Zuleitungsrohr 5 stützendes Kugelzapfenlager 25 an dessen unterem Ende allein oder zusätzlich zu verwenden.

Bei der in Fig. 6 dargestellten Ausführungsform ist der Siebboden 2 in dem oben offenen Behandlungsgefäß 1 kegelförmig mit einem geringen Kegelwinkel ausgebildet. Der Injektor 7 ist hierbei an Trägern 26 und am Siebboden 2 drehbar gelagert und wird über den Antriebsmotor 17 gedreht. Der Injektor 7 trägt den mit den Eintrittsöffnungen 20 für Schwimmkorn versehenen Ansaugarm 19, der entsprechend dem Kegelwinkel des Siebbodens 2 schräg mit geringem Abstand unter diesem verläuft. Der Ansaugarm 19 kann mit einem die Verengung 6 des Zuleitungsrohrs 5 tragenden und vom übrigen Zuleitungsrohr 5 drehbar aufgenommenen Abschnitt verbunden sein. Das Zuleitungsrohr 5 kann sich aber auch insgesamt mitdrehen.

Der Siebboden 2 kann auch hier in Form einer entsprechend flachen Pyramide (Oktaeder) korrespondierend zur Ausführungsform von Fig. 1 ausgebildet sein. Zwar verändert sich hierbei der Abstand des Ansaugarms 19 zum Schlitzboden 2 während der Drehung des Ansaugarms 19, jedoch ist dies nur relativ geringfügig und beeinträchtigt die Reinigung des Schwimmkorns nicht, zumal dieses durch die Bewegung des Ansaugarms 19 zusätzlich umgewälzt wird.

Bei der Ausbildung des Siebbodens 2 als Schlitzboden ist es auch hier zweckmäßig, die Schlitze 9 mit einer Länge von wenigstens einigen Schwimmkorndurchmessern im wesentlichen in Umfangsrichtung ausgerichtet anzuordnen, da sie dann durch Schwimmkorn, das durch das Drehen des Ansaugarms 19 gegenüber den Schlitzen 9 bewegt wird, freigehalten werden.

Auch bei der Ausführungsform der Fig. 6 kann der Ansaugarm 19 horizontal unterhalb des Siebbodens 2 verlaufen. Hierbei kann er aufwärts gerichtete Rohre tragen, die bis kurz unter den Siebboden 2 reichen und deren freie Enden die Eintrittsöffnungen 20 bilden.

Gegebenenfalls können an dem Ansaugarm 19 bzw. an dem sich drehenden Zuführrohr 5 Mittel zum Durchpflügen bzw. Auflockern des Schwimmkornfiltermaterials befestigt sein, die beispielsweise in Form von vertikalen und/oder horizontalen Stäben 28 (Fig. 6) od.dgl. ausgebildet sein können.

Der Bildung von Gasblasen unter dem Siebboden 2, selbst wenn dieser plan ist, wird durch das Verschieben des Schwimmkorns unterhalb des Siebbodens 2 durch den Ansaugarm 19 entgegengewirkt.

## Patentansprüche

1. Vorrichtung zum biologischen Reinigen von Wasser, insbesondere von vorgereinigtem Abwasser, mit einem Behandlungsgefäß (1), in dem ein Schwimmkornfilterbett (3) unter einem Siebboden (2) zum Begrenzen des Schwimmkornbereichs gegenüber darüber befindlichem Reinwasser angeordnet ist, wobei eine Zuleitung für zu reinigendes Rohwasser unterhalb des Schwimmkornfilterbetts (3) mündet und eine das Schwimmkorn abführende und spülende Wasserstrahlpumpe (6, 7) in der Zuleitung vorgesehen ist, dadurch **gekennzeichnet,** daß die Zuleitung ein unter dem Siebboden (2) befindliches, mittig und vertikal angeordnetes Zuleitungsrohr (5) aufweist, das unterhalb des Schwimmkornfilterbetts (3) endet und benachbart zum Siebboden (2) eine Verengung besitzt, die mit einem vor der Verengung (6) mündenden Injektor (7) die Wasserstrahlpumpe (6, 7) bildet.

2. Vorrichtung nach Anspruch 1, dadurch gekennzeichnet, daß der Siebboden (2) spitzkegelig oder spitzpyramidenförmig ist, wobei die Wasserstrahlpumpe (6, 7) unterhalb der Kegelspitze angeordnet ist.

3. Vorrichtung nach Anspruch 2, dadurch gekennzeichnet, daß der Siebboden (2) ein Schlitzdüsenboden ist, dessen Schlitze (9) im wesentlichen radial verlaufen.

4. Vorrichtung nach Anspruch 1, dadurch gekennzeichnet, daß der Siebboden (2) flach, flachkegelig oder flachpyramidenförmig ist, wobei mindestens ein sich unterhalb des Siebbodens (2) im wesentlichen über dessen Radius erstreckender, mit der Saugseite der Wasserstrahlpumpe (6, 7) gekoppelter und mit über seine Länge verteilten Eintrittsöffnungen (20) für Schwimmkorn versehener Ansaugarm (19) zum Ansaugen von Schwimmkorn von der Unterseite des Siebbodens (2) vorgesehen ist, der mittig im Behandlungsgefäß (1) gelagert und mittels eines Antriebs (17) drehbar ist.

5. Vorrichtung nach Anspruch 4, dadurch gekennzeichnet, daß das durch das Schwimmkornfilterbett (3) hindurchgeführte Zuleitungsrohr (5) den wenigstens einen Ansaugarm (19) trägt und mittels des Antriebs (17) drehbar ist.

6. Vorrichtung nach Anspruch 4 oder 5, dadurch gekennzeichnet, daß der mindestens eine Ansaugarm (19) mit seinem die Eintrittsöffnungen (20) aufweisenden Abschnitt horizontal verläuft.

7. Vorrichtung nach Anspruch 4 oder 5, dadurch gekennzeichnet, daß der mindestens eine Ansaugarm (19) mit seinem die Eintrittsöffnungen (20) aufweisenden Abschnitt entsprechend dem Neigungswinkel des Siebbodens (2) verläuft.

8. Vorrichtung nach einem der Ansprüche 4 bis 7, dadurch gekennzeichnet, daß der Ansaugarm (19) in Drehrichtung im Schnitt spitz zulaufend ausgebildet ist.

9. Vorrichtung nach einem der Ansprüche 4 bis 8, dadurch gekennzeichnet, daß die Eintrittsöffnungen (20) des Ansaugarms (19) an seiner Oberseite verteilt angeordnet sind.

10. Vorrichtung nach einem der Ansprüche 4 bis 8, dadurch gekennzeichnet, daß die Eintrittsöffnungen (20) des Ansaugarms (19) an seiner in Drehrichtung vorlaufenden Seite verteilt angeordnet sind.

11. Vorrichtung nach einem der Ansprüche 4 bis 8, dadurch gekennzeichnet, daß der Siebboden (2) schlitzförmige Durchtrittsöffnungen aufweist, die im wesentlichen in Umfangsrichtung ausgerichtet sind und eine Länge aufweisen, die einem mehrfachen Schwimmkorndurchmesser entspricht.

12. Vorrichtung nach einem der Ansprüche 4 bis 11, dadurch gekennzeichnet, daß der mindestens eine Ansaugarm (19) Mittel (28) zum Auflockern des Schwimmkorns aufweist.

13. Vorrichtung nach einem der Ansprüche 1 bis 12, dadurch gekennzeichnet, daß am Mündungsende des Zuleitungsrohrs (5) eine Verteilereinrichtung (8, 21) für austretendes Wasser und Schwimmkorn angeordnet ist.
